# EUROPEAN PATENT APPLICATION

(11) **EP 2 800 027 A1**
(43) Date of publication of application: **05.11.2014**
(21) Application number: 13002342.7
(22) Date of filing: 02.05.2013
(51) Int. Cl.: G06K 7/10

(54) **Method and apparatus for transmission of visually encoded data**

(71) Applicant: Giesecke & Devrient GmbH, 81677 München (DE)
(72) Inventor: Tea, Vui Huang, SE-12061 Stockholm (SE)

(57) **Abstract**

A method for visual transmission of a data set (D1, D2) from a display device (100) to a processing unit (300) comprises the following steps: For the representation of a first partial data set (D1) of the data set (D1, D2), first visually encoded image data (B1) are generated (S3) according to a first encoding method. Further, for the representation of a second partial data set (D2) of the data set (D1, D2), which is different from the first partial data set (D1), second visually encoded image data (B2) are generated (S4). The generation of the second visually encoded image data (B2) is effected according to a second encoding method different from the first encoding method. Finally, the first visually encoded image data (B1) and the second visually encoded image data (B2) are consecutively displayed (S5) through the display device (100).

## Description

The present invention relates to a method for visual transmission of a data set from a display device to a processing unit, a security element, a mobile end device having such a security element, a processing unit and a system comprising at least one display device and at least one processing unit.

Bar codes, in the form of 1D and 2D bar codes, have been traditionally affixed on printed matter and on physical objects to be read by appropriate bar code scanners. There are many types of bar codes, such as PDF417, microPDF417, MaxiCode, DataMatrix (standard, inverse), QR Code (standard, inverse and micro), Han Xin, Aztec (standard, inverse), etc. and variants. These codes generally work with the same imaging principle.

With increasing availability of mobile devices with auto-focus cameras and bar code scanners, bar codes, in particular 2D bar codes, have started to gain a big role in mobile marketing. The subscribers use their mobile phone to read a bar code that will bring them to a website, display information, and send SMS, etc. The next stage of mobile bar code has started gaining traction, and that is to issue boarding passes, tickets, store cards, coupons, etc. to the mobile phones and to display these bar codes to be read by a cashier, movie counter, shops, etc. Although the same type of bar codes are used, new sets of unanticipated problems have emerged that have never been addressed in prior use cases with printed bar codes.

One of these problems is, for example, that by means of a bar code or the like only a very restricted amount of data can be displayed. This applies all the more so since the display units of mobile end devices, for example the display of a smart phone, are limited in size and resolution. Also the resolving power of a reading device for capturing a displayed bar code is to be taken into account here and may constitute a limiting factor. In principle, it is possible to generate for a data set to be represented a sequence of bar codes coupled with each other and mutually related. These can then be successively displayed by the display device and, accordingly, successively captured by the reading device.

A larger problem is that mobile bar codes can be duplicated and/or forged in simple fashion. The software means necessary therefor are substantially freely available. One cannot tell by looking at a displayed mobile bar code, whether or not it is a copy produced in unauthorized fashion or even a forgery.

It is the object of the present invention to propose a method and a system, which make it possible to visually transmit also larger amounts of data, for example by means of displayed bar codes, in secured fashion.

This object is achieved by a method, a security element, a mobile end device having a security element, a processing unit, and a system with the features of the independent claims. Advantageous embodiments and developments are stated in the dependent claims.

A method according to the invention for visual transmission of a data set from a display device to a processing unit comprises the following steps:
For the representation of a first partial data set of the data set, first visually encoded image data are generated according to a first encoding method. The first visually encoded image data are generated preferably in the form of a bar code or of a sequence of bar codes according to a first bar code format.

In a further step, for the representation of a second partial data set of the data set, which is different from the first partial data set, second visually encoded image data are generated. The generation of the second visually encoded image data is effected according to a second encoding method different from the first encoding method, preferably in the form of at least one bar code or of a sequence of bar codes according to a second bar code format. The second bar code format, here, differs from the first bar code format.

In a third step, the first visually encoded image data and the second visually encoded image data are consecutively displayed through the display device, that means, normally, at first the first visually encoded image data and then the second visually encoded image data. The consecutive display can be repeated several times. A security element according to the invention is suitable to be temporarily or permanently integrated into a mobile end device, for example a smart phone, for example in the form of a SIM/UICC mobile radio card, a secure multimedia card, or the like. The security element comprises according to the invention an image data generation unit. This is adapted to generate, on the basis of the above-mentioned data set which comprises the first and the second partial data set, wherein for the representation of the first partial data set visually encoded image data according to a first encoding method are provided, second visually encoded image data according to a second encoding method different from the first encoding method.

A mobile end device according to the invention comprises a security element according to the invention and is adapted to carry out a method according to the invention in the role of the display device.

A processing unit according to the invention comprises a reading device which is adapted to capture first visually encoded image data as well as second visually encoded image data, generated in accordance with a method according to the invention and displayed through a display device. The processing unit further comprises a decoding unit. The decoding unit is adapted to decode the captured first visually encoded image data to the first partial data set and the captured second visually encoded image data to the second partial data set.

A system according to the invention, finally, comprises at least one display device, preferably in the form of a mobile end device according to the invention, as well as at least one processing unit according to the invention, which are respectively adapted to carry out a method according to the invention.

The present invention allows the transmission of larger amounts of data, since both the first visually encoded image data as well as the second visually encoded image data can be generated as a sequence of image data, in particular a sequence of bar codes. The length of the respective sequences is variable and can be adjusted to the size of the data set or the data capacity of the employed bar code format. Moreover, visually encoded image data, that have formerly, according to known bar code systems, been transmitted in unsecured fashion, these visually encoded image data corresponding to first visually encoded image data representing a first partial data set, can now, according to the present invention, be supplemented by second visually encoded image data representing a suitable second partial data set. This second partial data set can be employed in particular for securing the data transmission of the first partial data set against unauthorized copying and/or forging. For this purpose, the second partial data set can preferably comprise information which can prove integrity and/or authenticity of the first partial data set.

The employment of different encoding methods for generating the first and second visually encoded image data increases the flexibility and applicability of the method. In this way, a first partial data set and first visually encoded image data assigned to this partial data set can be integrated according to an arbitrary encoding method. The second partial data set can then be generated according to a predetermined, respectively suitable fixed or variably changeable second encoding method. This second encoding method can be adjusted in particular to the type and size of the second partial data set and, where applicable, to the display device and/or a reading device.

The term "visually encoded image data" is to be interpreted broadly in the present case, but is to comprise, as already mentioned, in particular bar codes. This relates in particular to all common and known types of one- and two-dimensional bar codes. In the same way, the term "visually encoded image data" is to comprise, however, also other visually representable codes, such as for example dot codes, color codes, icons and the like.

According to a preferred embodiment of the present invention, the transmitted data set is assigned to a predetermined transaction. The first partial data set of the data set here comprises content data, in particular transaction data. The second partial data set comprises securing data relating to these content data for establishing the integrity and/or authenticity of the first partial data set. The second partial data set preferably comprises a digital signature of the first partial data set. Starting out from a known method, both the first partial data set and the first visually encoded image data can remain unchanged. The second partial data set is normally dependent on the first partial data set, i.e. the generation of the second partial data set is based on the first partial data set.

According to a first, preferred embodiment, the first partial data set and the first visually encoded image data are generated through the processing unit or a unit connected to or associated with the processing unit and are transmitted to the display device. The first partial data set and the first image data encoding this partial data set can here correspond in particular to transaction data supplied by a service provider, for example in the form of a ticket, in particular a transport ticket, a coupon, or the like. The service provider normally operates also the processing unit for capturing and processing the corresponding data.

It is also possible that only the first partial data set is generated through the processing unit or the unit assigned to the processing unit and is transmitted to the display device. In this case, the first visually encoded image data, which represent the first partial data set, are generated through the display device.

However, in principle, it is also conceivable that the first partial data set and the first visually encoded image data representing the first partial data set are generated through the display device or that the display device receives the first partial data set and/or the first visually encoded image data from a third entity.

The second partial data set and the second visually encoded image data are normally generated through the display device. As mentioned above, the second partial data set or the second visually encoded image data preferably comprise securing data relating to the first partial data set, such as for example a digital signature. Here, the identity of the signatory is tied preferably to the end device and/or a security element of the end device. In this way, a partial data set, for example a mobile ticket, can be signed through a user of an end device, who has purchased the ticket, to be authentic - and to be his own - and thus be secured against unauthorized copying or forgery.

In principle, it is possible that also the second partial data set and, where applicable, the second visually encoded image data are generated through the processing device or the mentioned unit connected to the processing device and transmitted to the display device.

In an extension of the described method there can be provided further partial data sets of the data set different from the first and second partial data sets. These are then represented preferably as third visually encoded image data, normally a third encoding method different from the first and second encoding methods being employed for generating these third image data.

For example, a service provider may generate a first partial data set and represent it by means of first visually encoded image data, the first partial data set comprising usual transaction data. The service provider can secure this transaction data set by adding a second partial data set, the second partial data set comprising a digital signature of the first partial data set, which signature was created by the service provider. The first and second partial data set and, where applicable, the first and second visually encoded image data are then transmitted to the display device. There, a third partial data set can be generated and represented by means of third visually encoded image data. The third partial data set preferably comprises securing data which comprise a digital signature of the first and second partial data sets, the signature being created by a user of the display device.

Preferably, the first visually encoded image data representing the first partial data set comprise no information relating to the second visually encoded image data representing the second partial data set. In other words, the first visually encoded image data can be captured, decoded and processed without knowledge of the existence or of the contents of the second partial data set. This allows in particular bar codes received according to a known, existing bar code system as first visually encoded image data to be taken over in unchanged fashion. The second visually encoded image data coding the second partial data set represent in this respect only implicitly image data of a sequence of image data, which comprises the first visually encoded image data. The first visually encoded image data normally comprise in particular no sequence indicators or the like, which suggest the presence of the second visually encoded image data.

The method can comprise further steps which are carried out in the processing unit. The first and second visually encoded image data displayed through the display device are captured through a reading device of the processing unit, for example through a camera unit or scanner unit.

A decoding unit of the processing unit then decodes the first visually encoded image data to the first partial data set and decodes the second visually encoded image data to the second partial data set. By the first visually encoded image data being decodable and interpretable independently of the second visually encoded image data, as mentioned above, also a sequence of first and second image data can be decoded and evaluated according to the present invention by a conventional processing unit, at least with reference to the first visually encoded image data and the first partial data set underlying these image data. The second partial data set, which corresponds to the second visually encoded image data, can be ignored by the conventional processing unit.

As mentioned, as a display device there is preferably employed a mobile end device, for example a mobile radio end device, a smart phone, a tablet computer, a notebook, or the like. The mobile end device can also be used as a processing unit, however. For this purpose, the end device comprises a suitable reading unit, for example a camera. In this way, a data transmission is possible also in the reverse direction, i.e. from the processing unit, which then necessarily comprises a display unit, for example a display, to the display device.

The generation of the first and/or second visually encoded image data on the part of the display device is preferably carried out through an image data generation unit, which is executed on a security element integrated into the display device. This image data generation unit can be adapted to generate also the first visually encoded image data, in addition to the second visually encoded image data.

It is also possible, however, that the functionality of image data generation is carried out through the display device, that is the mobile end device. In this case it is advantageous to encrypt the partial data sets underlying the image data to be generated, before the transmission to the end device. An encryption can also be effected, however, when the image data are generated in the security element.

For this purpose, the security element according to the invention can comprise an encryption unit. This is adapted to encrypt corresponding data generated and/or received in secured fashion, which data can correspond to the first and/or the second partial data set. Preferably, such an encryption is effected in session-specific fashion, that is, in each encryption operation the session key and/or auxiliary data influencing the encryption, such as pseudo-random data or the like, are supplied in a modified form.

For the decryption of data encrypted in the described way, the processing unit accordingly comprises a decryption unit.

According to the embodiment wherein an encryption of the first and/or second partial data set through the security element is provided, the system according to the invention can comprise a background system. This background system can be adapted to coordinate the encryption and decryption of the transmitted data between the security element and the decryption unit of the processing unit. In other words, the background system is adapted to equip the security element and the processing unit with the en decryption keys and decryption keys, respectively, current pseudo-random data or the like that are to be respectively used. Alternatively, the background system can supply the security element and the processing unit with methods and rules for the synchronous generation of such keys and/or further auxiliary data. Activating and updating the security element and decryption unit is normally effected in secured fashion via an over-the-air interface (OTA) through the background system.

The security element preferably comprises a derivation unit. This unit is adapted to generate the second partial data set depending on the first partial data set. The second partial data set here comprises preferably a digital signature of the first partial data set. Normally, the security element receives the first partial data set in secured fashion from the processing unit.

Optionally, the first and/or second visually encoded image data can be optimized specifically for being displayed on the display device. For this purpose, the display device or the security element can comprise a corresponding optimization unit. This optimization unit here uses representation optimization values specific to the display device, which state in particular the technical conditions of the display device, for example the dimension of the display, the resolution of the display, and the like. The representation optimization values can be stored in the security element or the display device or can be requested from an external service.

The present invention will hereinafter be described by way of example with reference to the attached drawings. Therein are shown:
Figure 1 components of a preferred embodiment of a system according to the invention and
Figure 2 steps of a preferred embodiment of a method according to the invention for visually transmitting a data set from a display device to a processing unit.

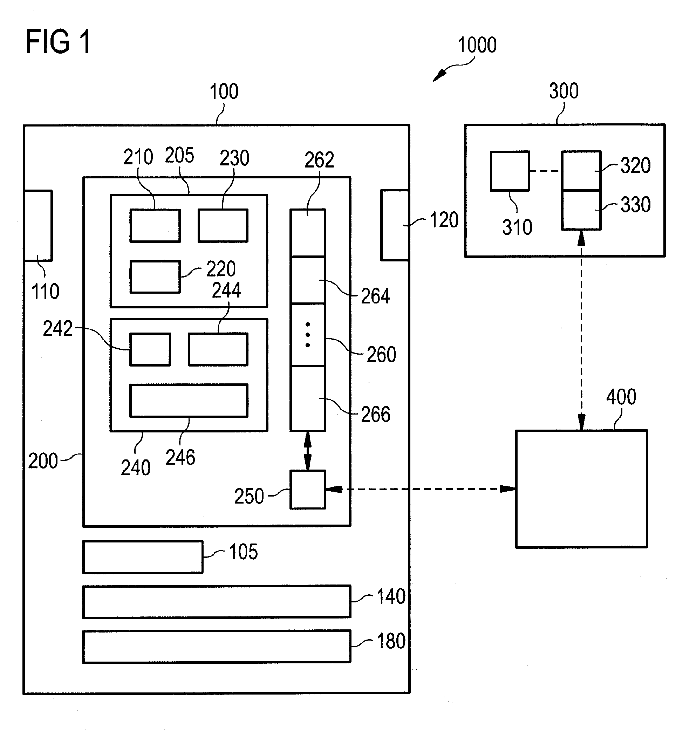

The system 1000 schematically shown in Figure 1 comprises a mobile end device 100 having a security element 200, a processing unit 300 as well as, optionally, a background system 400.

The mobile end device 100 can be configured for example as a smart phone, tablet computer, mobile radio end device, notebook, or the like.

The mobile end device 100 comprises a network interface 110 for communication via a data communication network, for example a mobile radio network or the Internet. Furthermore, the end device 100 comprises a communication interface 120 for contactless near-field data communication, for example in the form of an NFC interface.

An image data generation unit 140 serves to represent data, received from the security element 200, as visually encoded image data according to different encoding methods, in particular in the form of two-dimensional bar codes, in a fashion to be described in detail hereinafter. These image data can then be displayed via a display unit 180 of the end device 100, for example a display, for the optical capturing through a suitable reading device 310 of the processing unit 300.

The security element 200 comprises a supplying unit 205 for supplying a data set, for example in the form of transaction data. The security element 200 further comprises an image data generation unit 240 for generating image data, an encryption unit 250 for encrypting generated and/or received data, as well as a memory region 260 for storing different contents to be described hereinafter.

The security element 200 can be provided as a security element temporarily integratable into the end device 100 or firmly installed therein. Removably integratable security elements are for example SIM/UICC mobile radio cards, secure multimedia cards, or the like. As security elements 200 firmly installed in the end device 100 there can serve for example embedded SIM/UICC mobile radio cards, TPMs ("Trusted Platform Modules") or NFC modules. Finally, also secure execution environments within a specific hardware architecture of the end device 100, for example within an ARM TrustZone architecture, can serve as security elements 200, such as for example a "trusted execution environment" according to the "Global Platform" specification.

The supplying unit 205 can be a portion of a so-called wallet application. The wallet application here comprises a portion 105 which is executed on the end device 100 and serves as an interface and integration point for various portions installed on the security element 200, such as for example the portion 205. These portions of the wallet application, which are arranged on the side of the security element, can comprise for example payment applications, ticket applications, or the like. The supplying unit 205 can generate transaction data and/or receive them via a secured data transmission channel, for example from an assigned service provider, in the way described hereinafter.

The supplying unit 205 can comprise a receiving and generation unit 210, a decoding unit 220, as well as a derivation unit 230.

The receiving and generation unit 210 is adapted to generate a first partial data set, which corresponds to a first portion of an overall data set, within the security element or to receive the first partial data set via a secured data transmission channel. The overall data set is to be assigned to a transaction in the way described below.

In addition to the first partial data set, the receiving and generation unit 210 can receive first visually encoded image data which represent the first partial data set, preferably in the form of a bar code or a sequence of bar codes. These image data are generated in accordance with a first encoding method.

Alternatively, it is possible that the receiving and generation unit 210 only receives the first visually encoded image data which represent the first partial data set. In this case, the decoding unit 220 is adapted to decode the first visually encoded image data in order to obtain therefrom the first partial data set.

The derivation unit 230 is adapted to derive from the first partial data set a second partial data set different from the first partial data set. The second partial data set normally corresponds to a securing data set, which comprises in particular a digital signature of the first partial data set. Known signature methods can be used, for example based on RSA.

The image data generation unit 240 is adapted to generate first and second visually encoded image data representing the first and the second partial data set, respectively. For this purpose, the image data generation unit 240 comprises an encoding unit 244. This is adapted to generate visually encoded image data, in particular two-dimensional bar codes, according to different encoding methods. In particular, the encoding unit 244 is adapted to produce first visually encoded image data according to a first encoding method as well as to generate second visually encoded image data according to an encoding method different from the first encoding method.

In case the receiving and generation unit 210 has already received the first visually encoded image data representing the first partial data set, the encoding unit 244 only generates the second visually encoded image data which represent the second partial data set generated by the derivation unit 230. As mentioned above, this is done according to a second encoding method which differs from the first encoding method that has been employed for generating the first visually encoded image data. The encoding unit 244 is adapted to generate a sequence of image data, if underlying data sets are too large to be displayed through single image data sets, for example single bar codes. The sequence unit 242 can be adapted to accordingly divide a received data set, for example the first and/or second partial data set, into data blocks. For each of these data blocks the encoding unit 244 then generates an image datum of a corresponding image data sequence.

In case the receiving and generation unit 210 has received or generated itself only the first partial data set, image data generation unit 240 generates by means of the sequence unit 242 and the encoding unit 244 also the first visually encoded image data representing the first partial data set, preferably as a sequence of bar codes according to the first bar code format.

And the arrangement unit 246, finally, is adapted to arrange first visually encoded image data and second visually encoded image data in a corresponding sequence, which represent an overall data set corresponding to the first partial data set in connection with the second partial data set. This sequence can then be transmitted by the image data generation unit 240 to the device-side portion 105 of the wallet application for displaying through the end device 100.

Alternatively or additionally, the functionality of image data generation can also be supplied entirely or partly on the end device 100, for example through image data generation unit 140. This can be of a structure that is in principle analogous to the image data generation unit 240 of the security element 200. In other words, also the end device 100 can be adapted to generate, on the basis of the first and/or second partial data set, first or second visually encoded image data.

The encryption unit 250 of the security element 200 is adapted to encrypt, if necessary, the first and/or second partial data set, i.e. the entire transaction data set or parts thereof. First and second partial data set are normally encrypted separately and by means of different keys. The encryption is normally carried out in session-specific fashion. For this purpose, the security element 200 can be adapted to dynamically generate session keys 266 and to store them in the memory region 260.

This memory region 260 can comprise further data portions which can correspond to portions of transaction data of an arbitrary transaction, analogous to the first partial data set. For example, it can be provided that a data set 262 or a graphical icon 264 is read out from the memory 260 as the first partial data set or, in the case of the icon, as the first visual image data, by the supplying unit 205 and employed in the described fashion for carrying out a transaction.

The generation of the dynamically generated session keys 266 in the security element 200 can be coordinated through the background system 400 with a corresponding generation of session keys necessary for the decryption in the optional decryption unit 330 of the processing device 300. The encryption unit 250 of the security element 200 and the decryption unit 330 of the processing unit 300 are activated once, when required, by the background system 400 and updated as needed, for example via an over-the-air interface (OTA). In this connection, known hardware security modules can be used, for example in the form of M2M (machine-to-machine) SIM mobile radio cards or the like.

The processing unit 300 comprises a reading device 310, a decoding unit 320, and optionally an decryption unit 330. The reading device 310, which can be configured for example as a mobile hand-held device, is adapted to optically capture visually encoded first and second image data represented via the display unit 180 of the end device 100, for example by means of a camera unit or scanner unit.

The decoding unit 320 is adapted to decode the first and second visually encoded image data.

The decryption unit 330, finally, is adapted to decrypt the decoded image data, if these are present in encrypted form.

A further processing of the decoded and, where applicable, decrypted data, i.e. of the first and second partial data set, can be effected in the processing unit 300 or in a further device (not shown) connected with the processing unit 300.

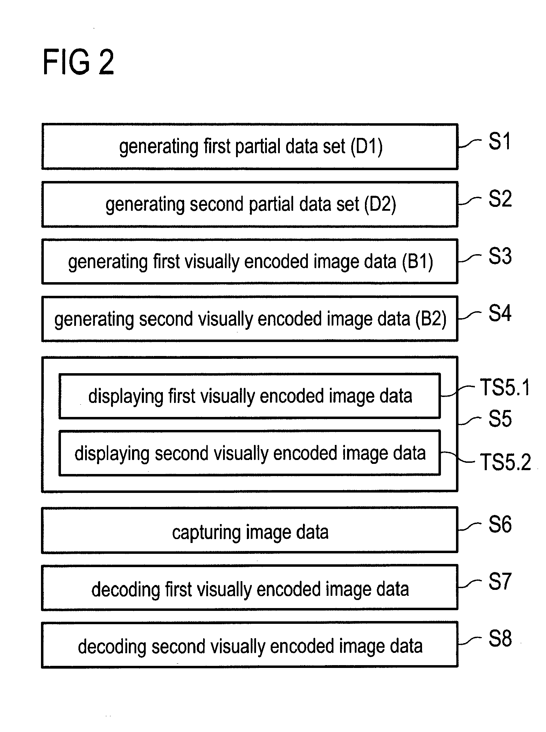

Substantial steps of a method for secured visual transmission of a data set from a display device 100 to a processing unit 300 are hereinafter described by way of example with reference to Figure 2.

A mobile transport ticket for the public transport, which for securing is provided with a digital signature, can correspond to the overall data set to be transmitted within the framework of the method. In other words, the ticket itself corresponds to the first partial data set, the signature over the transport ticket corresponds to the second partial data set. For representing the transport ticket, there are generated first visually encoded image data in the form of a two-dimensional bar code according to a first bar code format. Securing data, which represent the second partial data set and comprise the digital signature, correspond to the second visually encoded image data and are represented in the form of a bar code according to a second bar code format. Both the transport ticket and the securing data can also be respectively represented, if necessary, through a sequence of bar codes of the corresponding format.

According to step S1, the first partial data set (D1), corresponding to the mobile transport ticket, is generated. This is normally done through a corresponding service provider, for example a public transport service. The first partial data set is then transmitted to the end device 100 of the user, who has purchased the ticket, in secured fashion by the service provider, i.e. normally through the processing unit 300 or a unit connected or assigned to the processing unit 300. The ticket is received in the end device 100 of the receiving and generation unit 210 on the security element 200. Alternatively, the receiving and generation unit 210 can be adapted to generate the mobile transport ticket itself.

In step S2, the second partial data set (D2) is generated depending on the first partial data set. As described above, this is normally done through the derivation unit 230 of the security element 200. Specifically, the second partial data set is generated to be a digital signature over the mobile transport ticket. In this way, an unauthorized copying or a forging of the transport ticket can be reliably prevented.

For representing the transport ticket including the digital signature, in steps S3 and S4 there are generated first visually encoded image data (B1) representing the transport ticket, i.e. the first partial data set, as well as second visually encoded image data (B2) representing the second partial data set, in the described way through the image data generation unit 240 of the security element 200 and passed on to the device-side portion 105 of the wallet application for displaying through the end device 100.

As already described above, alternatively, the steps S3 and/or S4 can also be carried out on the end device 100.

In step S5 the first and second visually encoded image data are displayed through the display unit 180 of the end device 100. This is done, as indicated through the partial steps TS5.1 and TS5.2, in successive fashion. In other words, at first, the bar code corresponding to the first visually encoded image data is displayed through the display, followed by the bar code corresponding to the second visually encoded image data. The frequency of the image succession can be varied, for example depending on the capabilities of the reading device 310 of the processing unit 300, which captures the image data as illustrated with reference to step S6. A reliable capturing of the image data can be supported by a representation of the first and second visually encoded image data being repeated several times, for example until the reading device 310 signals that it has completely captured the corresponding data.

As illustrated with reference to the steps S7 and S8, the captured first and second visually encoded image data are subsequently decoded through the decoding unit 320 of the processing unit 300 to the first and second partial data set, respectively.

In a further step not shown, the digital signature, i.e. the second partial data set, can be verified depending on the first partial data set, thereby making it possible to check the authenticity of the transport ticket.

Optionally, there can additionally be provided a transmission of visually encoded image data in the reverse direction, i.e. from processing device 300 to mobile end device 100, for example in order to transfer transaction response data.

For this purpose, the processing device 300 comprises a display unit (not shown), for example a display, for displaying such data, for example again in the form of one or several bar codes according to one or various bar code formats, which can be based on encrypted or unencrypted response data.

The mobile end device 100 then additionally comprises a capturing unit (not shown), for example in the form of a camera, for capturing the one or more bar codes. The decoding unit 220 can serve to decode the captured data In case these transaction response data have been encrypted on the part of the processing device 300, the end device 100 can perform a decryption by means of a decryption unit (not shown) provided for this purpose. A coordination of the keys and auxiliary data necessary for encryption and decryption can be performed by the background system 400 in the above-described fashion also for this direction of data transmission.

## Claims

1. A method for visual transmission of a data set (D1, D2) from a display device (100) to a processing unit (300), comprising the steps of:
- generating (S3) first visually encoded image data (B1) according to a first encoding method, preferably in the form of at least one bar code according to a first bar code format, for representing a first partial data set (D1) of the data set (D1, D2);
- generating (S4) second visually encoded image data (B2) according to a second encoding method different from the first encoding method, preferably in the form of at least one bar code according to a second bar code format different from the first bar code format, for representing a second partial data set (D2) of the data set (D1, D2) different from the first partial data set (D1);
- consecutively displaying (S5) the first visually encoded image data (B1) and the second visually encoded image data (B2) through the display device (100).

2. The method according to claim 1, **characterized in that** the data set (D1, D2) is assigned to a predetermined transaction, the first partial data set (D1) comprising content data, in particular transaction data, and the second partial data set (D2) comprising securing data relating to the content data, in particular a digital signature.

3. The method according to either of claims 1 or 2, **characterized in that** the first partial data set (D1) and the first visually encoded image data (B1) are generated (S1; S3) through the processing unit (300) and transmitted to the display device (100).

4. The method according to either of claims 1 or 2, **characterized in that** the first partial data set (D1) is generated through the processing unit (S1) and transmitted to the display device (100) and that the first visually encoded image data (B1) are generated (S3) through the display device (100).

5. The method according to any of claims 1 to 4, **characterized in that** the second partial data set (D2) and the second visually encoded image data (B2) are generated (S2; S4) through the display device (100).

6. The method according to any of claims 1 to 5, **characterized in that** the second partial data set (D2) is generated dependent on the first partial data set (D1), the second partial data set (D2) comprising in particular a digital signature of the first partial data set (D1).

7. The method according to any of claims 1 to 6, **characterized in that** the first visually encoded image data (B1) representing the first partial data set (D1) comprise no information relating the second visually encoded image data (B2) representing the second partial data set (D2), in particular no sequence indicators which identify the first visually encoded image data (B1) and the second visually encoded image data (B2) as parts of a sequence of image data assigned to each other.

8. The method according to any of claims 1 to 7, comprising the further steps of:
- capturing (S6) the displayed first and second visually encoded image data (B1; B2) through a reading device (310) of the processing unit (300);
- decoding (S7) the first visually encoded image data (B1) to the first partial data set (D1) and decoding (S8) the second visually encoded image data (B2) to the second partial data set (D2) through the processing unit (320).

9. The method according to any of claims 1 to 8, **characterized in that** as a display device (100) there is employed a mobile end device and/or that as a processing unit (300) there is employed a mobile end device.

10. A security element (200), suitable for temporary or permanent integration into a mobile end device (100), comprising an image data generation unit (240) which is adapted to generate, on the basis of a data set (D1, D2) which comprises a first partial data set (D1) and a second partial data set (D2) different from the first partial data set (D1), wherein for representing the first partial data set (D1) there are provided first visually encoded image data (B1), generated according to a first encoding method, preferably in the form of at least one bar code according to a first bar code format, second visually encoded image data (B2) according to a second encoding method different from the first encoding method, preferably in the form of at least one bar code according to a second bar code format different from the first bar code format, for representing the second partial data set (D2).

11. The security element (200) according to claim 10, **characterized in that** the image data generation unit (240) is further adapted to generate the first visually encoded image data (B1) according to the first encoding method for representing the first partial data set (D1).

12. The security element (200) according to either of claims 10 or 11, **characterized in that** the security element (200) comprises a derivation unit (230) which is adapted to generate the second partial data set (D2) depending on the first partial data set (D1), the second partial data set (D2) preferably comprising a digital signature of the first partial data set (D1).

13. A mobile end device (100) having a security element (200) according to any of claims 10 to 12 and adapted to carry out a method according to any of claims 1 to 10.

14. A processing unit (300), comprising
- a reading device (310) which is adapted to capture first visually encoded image data (B1) and second visually encoded image data (B2), generated in accordance with a method according to any of claims 1 to 10 and displayed through a display device (100), and
- a decoding unit (320) which is adapted to decode the captured first visually encoded image data (B1) to the first partial data set (D1) and is adapted to decode the captured second visually encoded image data (B2) to the second partial data set (D2).

15. A system (1000) comprising at least a display device (100), preferably in the form of a mobile end device according to claim 13, as well as at least a processing unit (300) according to claim 14, which are adapted to carry out a method according to any of claims 1 to 10.
